# EUROPEAN PATENT APPLICATION

(11) **EP 2 781 326 A2**
(43) Date of publication of application: **24.09.2014**
(21) Application number: 14160748.1
(22) Date of filing: 19.03.2014
(51) Int. Cl.: B29C 33/42, F16L 59/02, F16L 59/14, B29L 23/00

(54) **Mold unit and method for forming a pipe insulation section from a curable heat insulation material and pipe insulation section**

(30) Priority: 22.03.2013 FI 20135282; 25.03.2013 FI 20135283
(71) Applicant: Paroc Group Oy, 00180 Helsinki (FI)
(72) Inventor: Skippari, Sami, 53500 Lappeenranta (FI); Hjelt, Tuomo, 53850 Lappeenranta (FI)
(74) Representative: LEITZINGER OY

(57) **Abstract**

The object of the invention is a mold unit for forming a pipe insulation section (17; 27) from curable heat insulation material, a method for manufacturing a pipe insulation section, and a pipe insulation section formed in said mold unit. The mold unit comprises a hollow mold (6), the internal surface (7) of which defines a substantially closed hollow space within the mold, and a core (1) that is installed or capable of being installed within the mold in the hollow space thereof and is removable therefrom, whereby the core shows an actual core portion (4), which as the core is installed within the mold defines the internal surface of a pipe insulation section to be formed and cured in the space between the core and the mold, and the internal surface (7) of the hollow mold defines the external surface of the pipe insulation section to be formed. The mold unit is arranged to, in the space between the core and the mold, bring about curing of the heat insulation material of the pipe insulation section to be formed. Additionally, the mold unit comprises members (8, 12) that define a groove (19; 29) in one end (18; 28) and a tongue (14; 24) in the other end of the pipe insulation section (17; 27) to be formed.

## Description

The object of the invention is a mold unit for forming a pipe insulation section from a curable heat insulation material, the mold unit comprising a hollow mold, the internal surface of which defines a substantially closed hollow space within the mold, and a core that is installed or capable of being installed within the mold in the hollow space thereof and is removable therefrom, whereby the core has an actual core portion defining the internal surface of a pipe section to be formed and cured in the space between the core and the mold as the core is installed within the mold, and the internal surface of the hollow mold defines the external surface of the pipe insulation section to be formed, the mold unit being arranged to bring about curing of the heat insulation material of the pipe section in the space between the core and the mold. Further objects of the invention are a method for forming a pipe insulation section from a curable heat insulation material and a pipe insulation section.

The manufacture of pipe insulation sections from curable heat insulation material, such as, stone wool or glass wool, in a mold unit comprising a hollow mold and an internal a core, which mold and core determine a space between them into which the heat insulation material can be placed, is as such known from, for example, the previous application EP12162801.0 of the applicant of this application. One disadvantage of the known solutions is that when one wishes to form tongue-and-groove joint members at the ends of the pipe insulation section, these have been made in a separate sawing work phase, which increases manufacturing costs due to the purchase and maintenance of the equipment needed, and prolongs the manufacturing period and leads to the generation of waste and material loss.

Accordingly, the goal of the invention is to provide an improved solution by which the disadvantages known in prior art are eliminated and the use of tongue-and-groove joints gets more reliable. In order to achieve this goal, it is characteristic for the mold unit according to the invention that the mold unit further comprises means defining a groove in one end of the pipe insulation section to be formed and a tongue in the other end thereof. Preferable embodiments of the mold unit are disclosed in the dependent claims 2-6. Characteristic for the method of the invention is that, in the method, the mold unit is provided with means that in the closed mode of the mold form a groove in one end and a tongue that is compatible with the groove in the other end of the heat insulation material to be cured between the mold and the core. Preferable embodiments of the method of the invention are disclosed in the dependent claims 8-9. It is characteristic for the pipe insulation section of the invention that, in the mold, a groove is formed in one end of the pipe insulation section and that a tongue is formed in the other end thereof.

In the following, the invention is described more closely with reference to the enclosed drawings:
- Figure 1: presents sections of the mold unit that are substantial with respect to the invention as a schematic isometric principal drawing,
- Figure 2a: presents an embodiment of the pipe insulation section as a schematic cross section,
- Figure 2b: presents the embodiment of Figure 2a as an isometric drawing,
- Figure 3a: presents a further embodiment of the pipe insulation section as a schematic cross section, and
- Figure 3b: presents the embodiment of figure 3a as an isometric drawing.

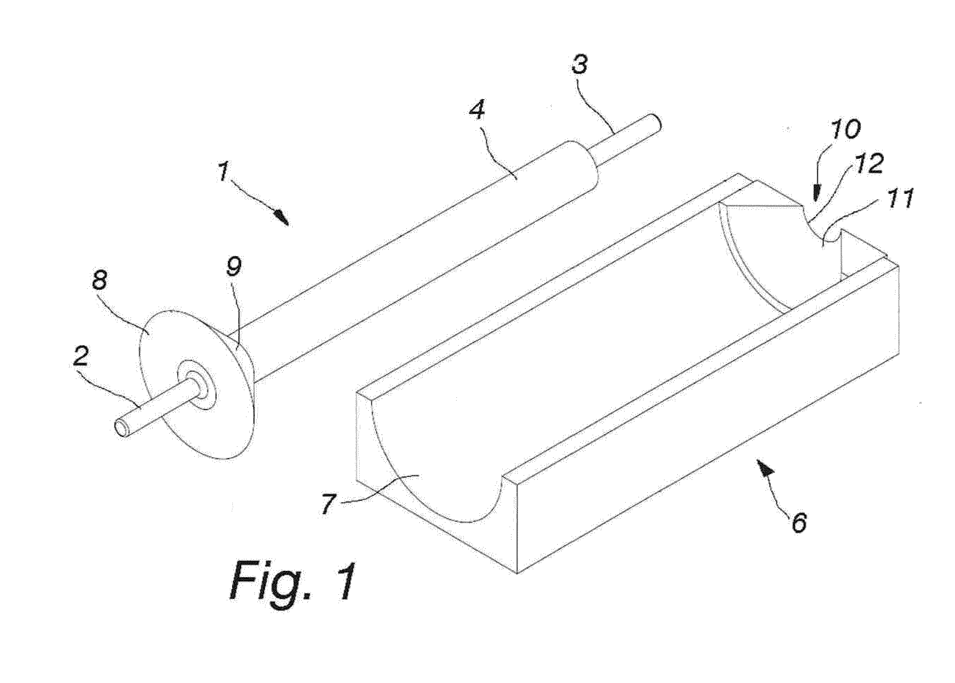

The embodiment of the mold unit presented in Figure 1 includes a lower mold part 6, which together with an upper mold part (not shown) forms a closed hollow space having an internal surface 7, which defines the external surface of the pipe insulation section to be cured in the mold. The mold part 6 is in one end 10 provided with a form part 12 having a cone shaped internal surface 11. Additionally, the mold unit comprises a core 1 having an actual core portion 4 which, when the core is installed within the mold, defines the internal surface of the pipe insulation section to be formed and cured in the space between the core and the mold. The core has axle stubs 2, 3 in the ends thereof, by which axle stubs the core can be moved and placed in place in the mold unit. In the disclosed embodiment, a form part 8 having the external surface 9 thereof shaped in the form of a truncated cone is arranged in one end of the core 1, which form part 8 can be detachably or fixedly attached to the core.

The forming parts can also be situated either in both ends of the mold or in both ends of the core and they can be a fixed part of the mold or core, but preferably these are detachable bodies, which allows rapid replacement of the form parts when needed, e.g., for service purposes or in order to make different connection pieces.

When placing the core and the heat insulation material arranged around it into the mold and when closing the mold, the heat insulation material is formed by the form parts 8 and 12 such that a groove and a tongue are formed, respectively, at each end of the pipe insulation section taking form. The heat insulation material can be, for example, stone wool, which is rolled in the form of a mat or ply around the core into at least one layer. The core is preferably heated before rolling the stone wool around it.

Alternatively, one can consider an implementation where the mold is closed and filled trough an adequate feeding channel by blowing in stone- or other suitable heat insulation material in loose form, after which the curing is performed. This loose wool or corresponding material is easily shaped by the form parts 8 and 12 into a desired shape and especially the formation of different locking grooves and locking ribs or ridges on the surface of tongue-and-groove portions being placed against each other is relatively easy.

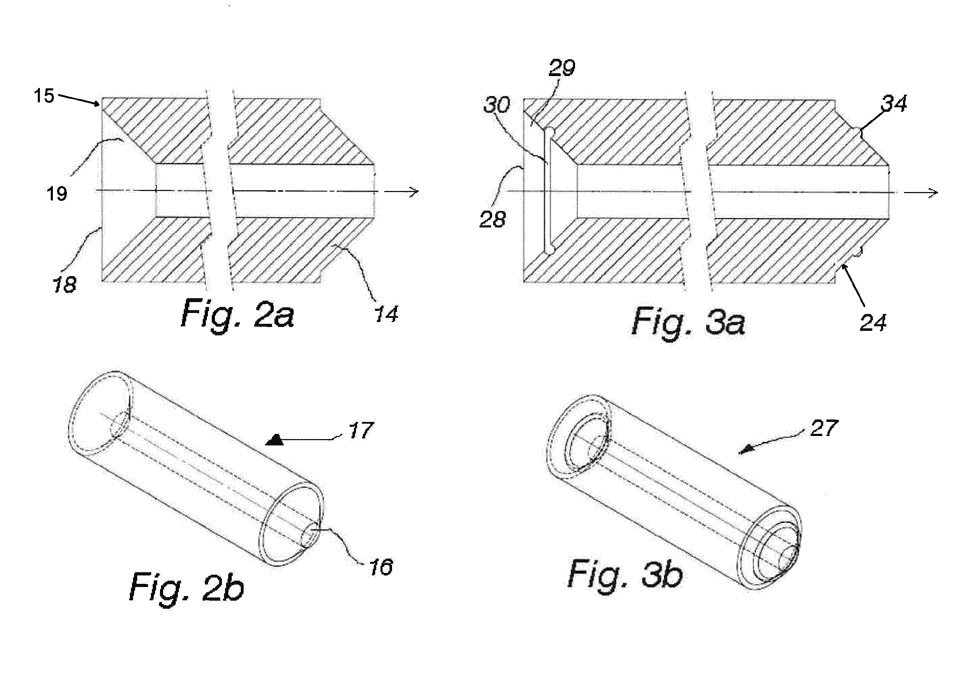

In Figures 2a-3b, different embodiments of the pipe insulation section to be formed in the mold unit are shown. In the embodiment presented in Figures 2a-2b, the pipe insulation section 17 comprises a internal hollow space 16, which in one end 18 of the pipe insulation section expands to a cone shaped female connecting piece 19, which forms a small neck 15 between the internal surface of its outwards opening mouth and the external surface of the pipe insulation section. In the other end of the pipe insulation section, a male connection piece 14 is formed, which correspondingly shows a small shoulder 13 that when placing pipe insulation sections one after another around a pipe to be insulated places itself against the neck 15 of a female connection piece of an adjacent pipe insulation section.

The embodiment presented in Figures 3a-3b differs from the embodiment in Figures 2a-2b mostly in that a locking groove 30 is formed on the internal surface of the female connection piece 29 situated in one end 28 and a locking ridge 34 capable of being joined together with the locking groove is formed on the external surface of the male connection piece 24. Hereby, adjacent pipe insulation sections are locked together when pushing the tongue portion 24 into the groove portion 29.

## Claims

1. A mold unit for forming a pipe insulation section (17; 27) from curable heat insulation material, the mold unit comprising a hollow mold (6), the internal surface (7) of which defines a substantially closed hollow space within the mold, and a core (1) that is installed or capable of being installed within the mold in the hollow space thereof and is removable therefrom, whereby the core shows an actual core portion (4), which as the core is installed within the mold defines the internal surface of a pipe insulation section to be formed and cured in the space between the core and the mold, and the internal surface (7) of the hollow mold defines the external surface of the pipe insulation section to be formed, the mold unit being arranged to, in the space between the core and the mold, bring about curing of the heat insulation material of the pipe insulation section to be formed, **characterized in that** the mold unit additionally comprises members (8, 12) that define a groove (19; 29) in one end (18; 28) of the pipe insulation section (17; 27) to be formed and a tongue (14; 24) in the other end thereof.

2. Mold unit according to claim 1, **characterized in that** said groove and tongue defining members comprise a first and a second fixed or to the mold unit detachably attachable form part (8, 12), the first form part of which is placed or capable of being placed in one end of the hollow space of the mold and the other form part is placed or capable of being placed in the other end (10) of the hollow space.

3. Mold unit according to claim 2, **characterized in that** the first form part (8) in terms of its external surface is a truncated cone defining the groove, and the other form part is in terms of its internal surface a truncated cone of corresponding shape defining the tongue, which is compatible with the groove.

4. Mold unit according to any one of claims 1 to 3, wherein the hollow mold comprises a lower and an upper part capable of being moved apart and together, whereby a core (1) is installable in the lower part (6) when the lower and upper part of the mold are apart, and the upper part of the mold is installable on the core-bearing lower part of the mold, **characterized in that** the first form part (8) is fixedly or detachably attached to one end of the actual core portion (4) in the end area thereof and the other form part (12) is fixedly or detachably attached within the lower or upper part of the outer mold in the other end (10) thereof.

5. Mold unit according to any one of claims 1 to 3, wherein the hollow mold comprises a lower and an upper part capable of being moved apart and together, whereby a core (1) is installable in the lower part (6) when the lower and upper part of the mold are apart, and the upper part of the mold is installable on the core-bearing lower part of the mold, **characterized in that** one end of the core in terms of its outer shape is formed such that it in one end of the pipe insulation to be formed defines a groove and the other end of the core is in terms of its outer shape formed such that it defines a tongue in the other end of the pipe insulation section to be formed.

6. Mold unit according to any one of claims 1 to 5, **characterized in that** the hollow space of the hollow mold is essentially cylindrical, the actual core portion (4) of the core (1) is essentially cylindrical and the core (1) is centrally installed or capable of being installed in the hollow space of the mold.

7. Method for the manufacturing of a pipe insulation section, having a groove and a tongue, from curable heat insulation material, in which method a mold unit is used, the mold unit comprising a hollow mold (6), the internal surface (7) of which defines a substantially closed hollow space within the mold, and a core (1) that is installed or capable of being installed within the mold in the hollow space thereof and is removable therefrom, whereby the core shows an actual core portion (4), which as the core is installed inside the mold defines the internal surface of the pipe insulation section to be formed and cured in the space between the core and the mold, and the internal surface (7) of the hollow mold defines the external surface of the pipe insulation section to be formed, the mold unit being arranged to, in the space between the core and the mold, bring about curing of the heat insulation material of the pipe insulation section to be formed, **characterized in that** in the method, the mold unit is provided with members (8, 12) that in the closed mode of the mold form a groove in one end of the heat insulation material to be cured between the mold and the core and in the other end a tongue that is compatible with the groove.

8. Method according to claim 7, **characterized in that** said forming members (8, 12), when the mold is being closed, in one end of the heat insulation material layer placed between the core and the mold shapes a groove and in the other end a tongue that is compatible with the groove.

9. Method according to claim 7, **characterized in that** in the method, the mold is closed and the space between the mold and the core is filled with loose curable heat insulation material, that by means of the forming means (8, 12) form a groove in one end of the heat insulation material and a tongue that is compatible with the groove in the other end.

10. Pipe insulation section, which is formed from curable heat insulation material in a mold unit comprising a hollow mold and its internal core (1), which mold and core (1) define a space between them into which the heat insulation material is placeable, whereby the core defines the internal surface of the pipe insulation section to be formed and cured, and the internal surface (7) of the hollow mold defines the external surface of the pipe insulation section to be formed, the mold unit being arranged to bring about curing of the heat insulation material in the space between the core and the mold, **characterized in that** a groove (19; 29) is formed in one end (18; 28) of the pipe insulation section (17; 27) and a tongue (14; 24) in the other end thereof.
